# EUROPÄISCHE PATENTSCHRIFT

(11) **EP 0 597 349 B1**
(45) Veröffentlichungstag und Bekanntmachung des Hinweises auf die Patenterteilung: **08.03.2000**
(21) Anmeldenummer: 93117699.4
(22) Anmeldetag: 02.11.1993
(51) Int. Cl.: H04J 3/06, H04J 3/04

(54) **Verfahren und Anordnung zur Rückgewinnung von in Funktionsdatenblöcken übertragenen plesiochronen Signalen**
Method and arrangement for recovering plesiochrone signals transmitted in tributaries
Procédé et dispositif pour récupérer des signaux plesiochrones transmis par des unités affluentes

(30) Priorität: 11.11.1992 DE 4238090
(43) Veröffentlichungstag der Anmeldung: 18.05.1994
(73) Patentinhaber: SIEMENS AKTIENGESELLSCHAFT, 80333 München (DE)
(72) Erfinder: Volejnik, Wilhelm, Dipl.-Ing., D-82054 Sauerlach (DE)

(56) Entgegenhaltungen:
- EP-A- 0 397 144
- EP-A- 0 481 400
- EP-A- 0 485 022
- WO-A-91/07830
- DE-A- 3 934 248
- ELECTRONICS LETTERS. Bd. 21, Nr. 11 , 23. Mai 1985 , STEVENAGE GB Seiten 487 - 489 HENRY ET AL. '1.7 Gbit/s MULTIPLEXING-DEMULTIPLEXING SYSTEM FOR A HIGH-BIT-RATE OPTICAL LINK'
- RESEARCH DISCLOSURE Nr. 311 , März 1990 , NEW YORK US Seite 225 N.N. 'FRAME SYNCHRONIZER WITH PARALLEL LOGIC FOR DETECTING LOCATION OF A SYNC CHARACTER AND LOGIC CIRCUITS FOR REALIGNING DATA IN TWO ADJACENT FRAMES'

## Beschreibung

In der synchronen digitalen Hierarchie (SDH) werden plesiochrone Signale in Funktionsdatenblöcke, sogenannte Container, eingefügt und in synchronen Transportmodulen übertragen.

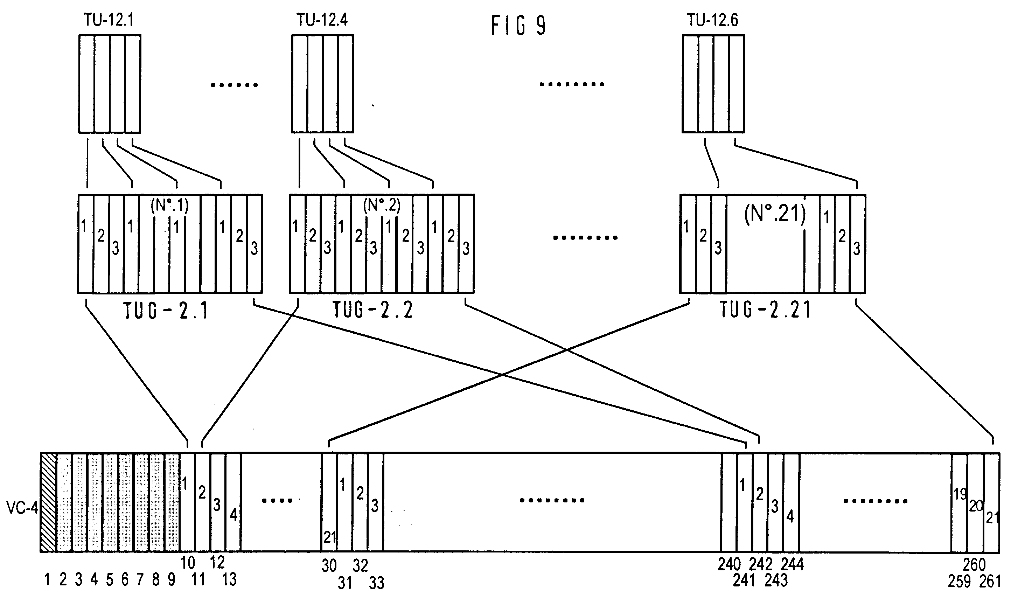

Im CCITT Blue Book, Vol. III-Fascicle III.4 sind in der Recommandation G. 709 unterschiedliche Multiplexstrukturen dargestellt. Beispielsweise werden mehrere synchrone oder plesiochrone Signale oktettweise in spezielle Pulsrahmen oder Funktionsdatenblöcke, vier Spalten umfassende Tributary Units TU-12, eingefügt. Diese werden wiederum in Tributary Unit Groups TUG-21.1 - TUG-21.21 eingefügt und von diesen werden 21 in einen Container VC-4 eingefügt und in Form eines synchronen Transportmoduls übertragen. Es sind mehrere Möglichkeiten zur Übertragung von plesiochronen Signalen mit unterschiedliche Datenraten vorgesehen. Das vereinfachte Schema ist in Figur 9 dargestellt und dient lediglich zur Erläuterung des Ausführungsbeispiels.

Bei plesiochronen Signalen stimmen in der Regel die Grenzen der Datenwörter nicht mit denen der zur Übertragung vorgesehenen Oktetts überein.

Es sind nun unterschiedliche Verfahren Anordnungen zur Ausrichtung der Wortgrenzen bei einzelnen Signalen bekannt.

In der europäischen Patentanmeldung 0 397 144 A1 ist ein Verfahren beschrieben, das die seriellen Daten in parallele Oktetts umsetzt und jeweils ein Oktett zwischenspeichert. Von der Synchronisierung wird der Synchronisierversatz erkannt und aus den jeweils vorliegenden zwei Oktetts werden die Datenwörter über eine Auswählschaltung ausgewählt.

In der europäischen Patentanmeldung 0485 022 A2 ist eine Schaltungsanordnung für das Entfernen von Stopfbits eines Signals beschrieben.

Aus der Offenlegungsschrift DE 39 34 248 A1 sind ein Multiplexer und ein Demultiplexer bekannt, die bei Datenübertragung in der synchronen Digital Hierarchie eingesetzt werden. Die Verarbeitung der Daten erfolgt byteweise mit Hilfe von elastischen Speichern. Mit Hilfe des Demultiplexers werden Stopfbits eliminiert, indem sie beim Einschreiben des darauffolgenden Wortes durch Verschieben der Speicheradresse überschrieben werden. Hierdurch wird trotz byteweiser Verarbeitung ein kontinuierlicher Datenstrom erzielt, der von Zusatzinformation und Stopfbits befreit ist.

Wenn jedoch plesiochrone Signale im Zeitmultiplexbetrieb übertragen werden, grenzen deren Oktetts nicht mehr aneinander an, sondern sind durch die Oktetts aller anderen plesiochronen Signale getrennt. Durch unterschiedliche Datenraten und die entsprechenden Stopfvorgänge verschieben sich auch die Grenzen der Datenwörter fortlaufend gegeneinander.

Für die entsprechende Verarbeitung von plesiochronen Multiplexsignalen ist diesen Patentanmeldungen jedoch kein Hinweis zu entnehmen.

Das Problem besteht darin, die plesiochronen Signale gleicher Solldatenrate aus dem Funktionsdatenblock zu separieren und auszugeben. Hierbei ist ein Verfahren anzugeben, das mit möglichst geringem Schaltungsaufwand realisiert werden kann. Außerdem ist eine hierzu geeignete Anordnung anzugeben.

Das Problem wird durch das im Patentanspruch 1 angegebene Verfahren gelöst. Eine geeignete Anordnung ist im unabhängigen Anspruch 7 angegeben.

Vorteilhafte Weiterbildungen der Erfindung sind in den Unteransprüchen beschrieben.

Der besondere Vorteil der Erfindung liegt in der gemeinsamen im Zeitmultiplexbetrieb erfolgenden Verarbeitung.

Besonders vorteilhaft ist auch die Verwendung von digitalen Regelschleifen.

Eine weitere Vereinfachung der Anordnung wird durch eine nur einseitig ausgerichtete Taktanpassung des Ausgabetaktsignals an die Datenrate eines plesiochronen Signals erreicht.

Das Verfahren und ein Ausführungsbeispiel werden anhand von Figuren näher erläutert.

Es zeigen
- Fig. 1: ein Blockschaltbild der Rückgewinnungsanordnung,
- Fig. 2: ein Prinzipschaltbild der Wortjustiereinrichtung,
- Fig. 3: ein erstes Zeitdiagramm zur Erläuterung der Funktion,
- Fig. 4: ein zweites Zeitdiagramm zur Erläuterung der Funktion ,
- Fig. 5: eine kombinatorische Logikschaltung zur Berechnung von Kontrollbits,
- Fig. 6: einen Seriell-Parallel-Umsetzer,
- Fig. 7: eine Phasenregelungseinrichtung und
- Fig. 8: eine Kennlinie zur Steuerung des Ausgabetaktes.

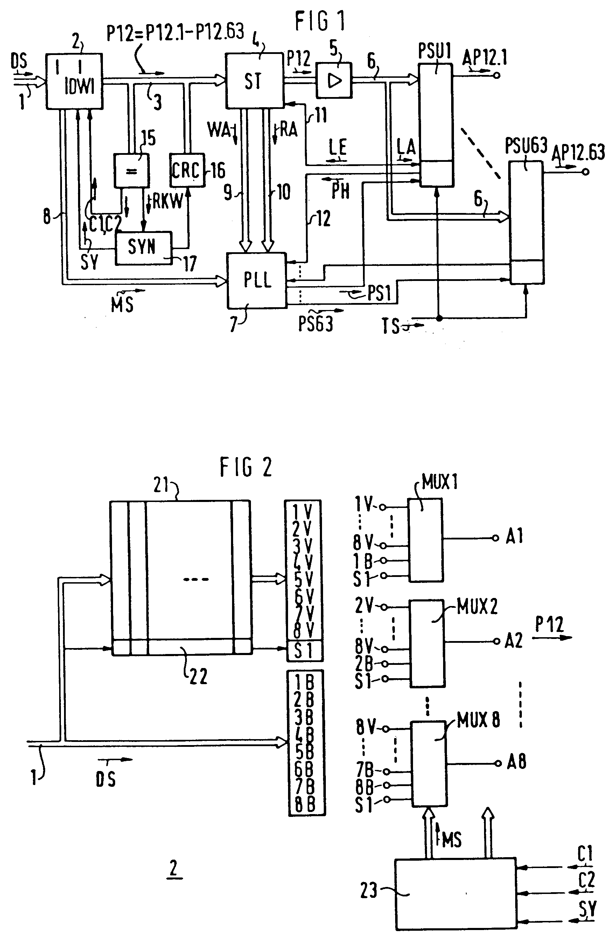

In Figur 1 ist eine Rückgewinnungsanordnung für plesiochrone Signale dargestellt.

Zur Erläuterung der Funktion wird angenommen, daß 63 plesiochrone P12-Signale P12.1 bis P12.63, die jeweils einer TU-12 zugeordnet sind, in einem synchronen Transportmodul STM-1 übertragen werden, wie dies einleitend erläutert wurde. Die Stopfinformation C1, C2 wird an vorgegebenen Stellen des Transportmoduls übertragen.

Die Rückgewinnungsanordnung enthält im wesentlichen eine Wortjustiereinrichtung 2, der über einen Datenbus 1 das Nutzdatensignal DS zugeführt wird. Der Ausgang der Wortjustiereinrichtung, ist über einen weiteren Datenbus 3 mit dem Eingang eines Pufferspeichers 4 verbunden. Dessen Ausgang ist - falls erforderlich über einen Bussignalverstärker 5 - mit einem Bussystem 6 verbunden, das an die Dateneingänge von mehreren Parallel-Seriell-Umsetzern PSU1 bis PSU63 geführt ist.

Anstelle der Parallel-Seriell-Umsetzer können Register treten an deren Ausgänge Demultiplexer zur Rückgewinnung von 64 kbit/s-Signalen angeschaltet sind.

Außerdem ist eine Phasenregeleinrichtung 7 vorgesehen, die über weitere Busverbindungen 8 bis 11 Information von der Wortjustiereinrichtung, dem Pufferspeicher und den Parallel-Seriell-Umsetzern erhält. Den Parallel-Seriell-Umsetzern wird ein Taktsignal TS zugeführt, das die Frequenz eines P12-Datensignals aufweist oder durch die Phasenregeleinrichtung an diese angepaßt wird.

Die Rückgewinnungsanordnung separiert aus dem Nutzdatensignal, das in den Pulsrahmen eines Containers C4 eingefügt ist, die miteinander byteweise verschachtelten 63 P12-Signale, führt eine Justierung der Datenwörter DW (Bytes) durch und gibt sie, wie in Fig. 1 dargestellt ist, als serielle Ausgangssignale AP12.1 bis AP12.63 oder byteweise in paralleler Form ab. An dem Bus 3 sind außerdem eine Vergleichseinrichtung 15 und eine Kontrollschaltung 16 angeschlossen. Die Vergleichsschaltung gibt bei Empfang eines Rahmenkennungswortes RKW und von Stopfinformation die entsprechenden Ausgangssignale ab. Die Kontrollschaltung überprüft die Daten der P12-Signale auf Fehler. Eine an die Vergleichseinrichtung 15 angeschaltete Synchronisierung 17 zur Feststellung der Wortgrenzen der 2048-kbit/s-Signale P12 greift ebenfalls in die Wortjustiereinrichtung 2 ein und bewirkt die durch Auswertung des Rahmenkennungswortes die Wortsynchronisation. Die Anpassung an die Datenraten der plesiochronen Signale P12 erfolgt durch die Phasenregeleinrichtung 7 mit Hilfe des Pufferspeichers 4.

In Figur 2 ist die Wortjustiereinrichtung 2 als Prinzipschaltbild dargestellt. Sie enthält einen Zwischenspeicher 21, dem über den Datenbus 1 jeweils ein Oktett (Byte) des Nutzdatensignals DS zugeführt wird, und Speicherstufen 22, in die einzelne Stopfbits S1 eingespeichert werden. Der Speicher 21 weist eine Breite von einem Byte bei einem Speicherumfang von 63 Bytes auf, so daß bei einer vorgegebenen Speicheradresse jeweils zwei aufeinanderfolgende Oktetts (Bytes) derselben TU-12 an den Ausgängen des Speichers 21 und dem Datenbus 1 anliegen. Ebenso sind 63 Speicherstufen 22 vorhanden. Außerdem sind 8 Multiplexer MUX1 bis MUX8 vorhanden, deren Eingänge - wie in Fig. 2 dargestellt - mit dem Bus 1 und den Ausgängen des Speichers 21 und der letzten der Speicherstufen 22 verbunden sind. Eine Steuerung 23, die sowohl hardware- als auch softwaremäßig realisiert werden kann, steuert die Multiplexer.

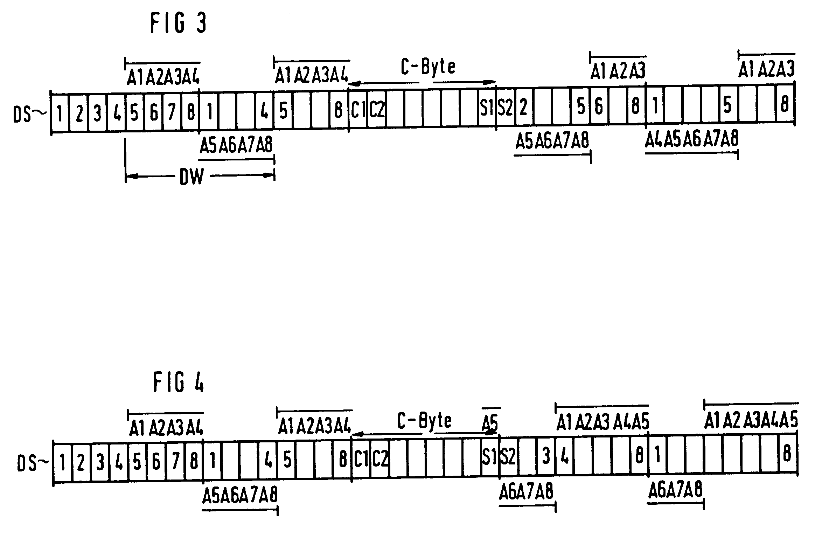

Anhand von Figur 3 wird die Wirkungsweise der Wortjustiereinrichtung näher erläutert. In dem Diagramm ist ein im übertragenen Nutzdatensignals DS enthaltenes 2,048 Mbit/s-Signal (P12-Signal) in serieller Form dargestellt. Jeweils acht Bits 1 bis 8 bilden ein Oktett, das in einem Zeitschlitz des Containers übertragen wird. Das serielle Signal wird dann in das parallele Signal P12 mit ein Byte breiten Datenwörtern DW umsetzt, das über den Datenbus 1 übertragen wird und an den Eingängen des Speichers 21 anliegt. Betrachtet wird zunächst nur ein TU12- bzw. P12-Signal, dessen Oktetts in Fig. 3 aneinandergrenzend dargestellt sind. Auf dem Datenbus 1 werden jeweils zwischen den dargestellten Oktetts 62 weitere Oktetts der übrigen P12-Signale übertragen.

Wenn keine Phasenverschiebung zwischen den empfangenen TU12-Oktetts und in den Pufferspeicher 4 einzuschreibenden P12-Bytes besteht, dann werden diese direkt vom Ausgang des Zwischenspeichers 21 in dem Pufferspeicher 4 übernommen. Das P12-Signal wird in der Regel im "asynchronous mode" nicht bytesynchron in die Zeitschlitze einer TU12 (bzw. eines Containers) eingefügt. Durch Stopfvorgänge kommt es zu weiteren Phasenverschiebungen. So werden beispielsweise die Bits 5 bis 8 des ersten in Fig. 3 dargestellten Oktetts und die Bits 1 bis 4 des folgenden Oktetts an den Ausgängen A1 bis A8 der Multiplexer MUX1 bis MUX8 als ein Byte des P12-Signals abgegeben. Die ersten an den Ausgängen A1 ... A4 der Multiplexer abgegebenen Bits entsprechen den verzögerten Bits 5V bis 8V (oberhalb des P12-Signals markiert) und die an den Ausgängen A5 bis A8 folgenden Bits den direkt von dem Datenbus übernommenen Bits 1B bis 4B. Die Multiplexer werden so gesteuert, daß sie jeweils die gewünschten 8 Bits durchschalten, so daß am Bus 3 jeweils eine Byte eines der P12-Signale anliegt. Um die Steuerung zu erleichtern, sind die Eingänge unterschiedlich verdrahtet, so daß alle Multiplexer - beispielsweise beim Auslesen der Bits 1V bis 8V - mit derselben Steueradresse 0 arbeiten. Die Multiplexer weisen mindestens 9 Eingänge auf; durch eine Version mit 10 Eingängen wird die Steuerung vereinfacht.

Im Zeitdiagramm nach Figur 3 wird in einem Oktett ein sogenanntes C-Byte übertragen, dessen Stopfinformationsbits C1 und C2 angeben, daß das erste Bit S2 des folgenden Oktetts als Stopfbit keine Information enthält. Folglich werden bei diesem positiven Stopfvorgang die Bits 5V bis 8V und 2B bis 5B an die Ausgängen A1 bis A8 durchgeschaltet. Anschließend die Bits 6V bis 8V und 1B bis 5B usw.

In Figur 4 ist ein Zeitdiagramm für negatives Stopfen dargestellt. Vor dem Empfang eines weiteren C-Bytes sind bereits die Bits 1 bis 8 des vorangegangenen Oktetts desselben P12-Signals im Zwischenspeicher 21 eingespeichert worden. Durch die Stopfinformationsbits C1 und C2 wird signalisiert, daß an letzter Position des C-Bytes ein Stopfbit S1, das Nutzinformation aufweist, übertragen wird. Dies wird in den Speicherstufen 22 zwischengespeichert. Nach einer weiteren Container-Periode liegt das Stopfbit S1 und das diesem vorangegangene Oktett desselben P12-Signals liegt in Figur 4 an deren Ausgang an. Erst nach Anliegen des nächsten Oktetts derselben TU12 auf dem Datenbus 1 kann ein komplettes Byte 5V...8V, S1, 1B ...3B übernommen werden und an den Ausgängen A1 bis A8 der Multiplexer abgegeben werden. Anschließend werden die fünf letzten Bits 4V bis 8V und die ersten drei Bits 1B bis 3B des folgenden Bytes an die Ausgänge A1 bis A8 durchgeschaltet usw.

Die Steuerung 23 besteht im wesentlichen aus einer Zählvorrichtung und Speichern. Wird das nächste Byte desselben P12-Signals durchgeschaltet, dann bleiben die Steueradressen der Multiplexer in der Regel unverändert. Bei Stopfvorgängen müssen aber die Stopfbits S1 und S2 bei der Berechnung des Steuersignals für die Multiplexer MUX1 bis MUX8 unterschiedlich berücksichtigt werden. Die Steuerung erfolgt für alle P12-Signale separat; d.h. es sind entsprechend der Anzahl der TU12 bzw. P12-Signale 63 Speicher für die Steueradressen vorhanden.

Da im allgemeinen die Bytegrenzen der eingefügten P12-Signale nicht mit den Zeitschlitzen (Oktetts) des zur Übertragung verwendeten Containers übereinstimmen, muß zunächst durch die Synchronisierung, die das an den Ausgängen A1 bis A8 der Multiplexer abgegebene Byte mit einem Rahmenkennungswort des P12-Signals vergleicht und gegebenenfalls die Einstellung der Multiplexer verändert, der Rahmenbeginn gefunden werden und damit die Bytesynchronisierung erfolgen. Die byteweise Verarbeitung ist für eine Reihe von hier nicht weiter beschriebenen Funktionen besonders dann vorteilhaft, wenn sich jedes 2048-bit/s-Signals wiederum aus 32 64-kbit/s-Kanälen zusammensetzt. Durch einen nachgeschalteten Demultiplexer anstelle der Parallel-Seriell-Umsetzer kann so direkt eine Aufteilung in die 64-kbit/s-Kanäle erfolgen.

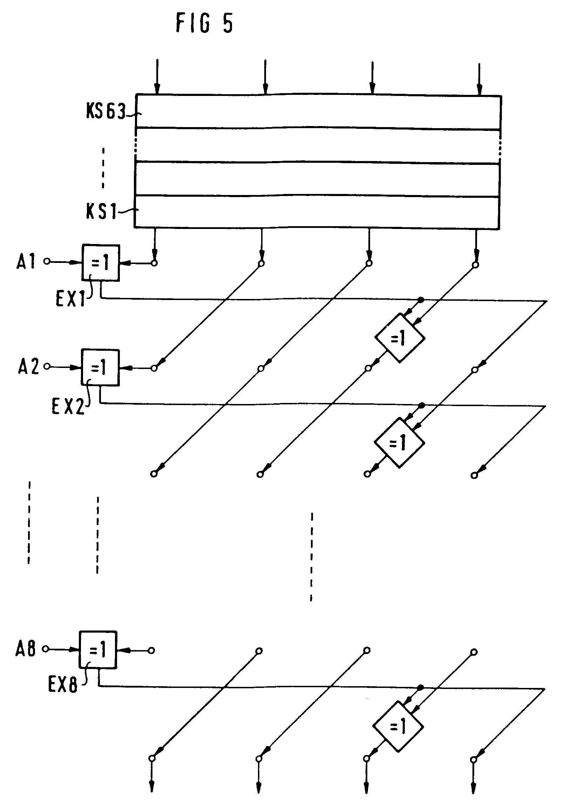

Eine der Vorteile bei bytesynchroner Verarbeitung besteht in einer aufwandsreduzierten Paritätsberechnung CRC-4 (Cyclic Redundancy Check). In Figur 5 ist die für alle 2048-kbit/s-Signale nur einmal vorhandene Schaltung dargestellt. Die Eingänge der Exclusive-ODER-Gatter EX1 bis EX8 auf der linken Seite sind mit den Ausgängen A1 bis A8 der Multiplexer verbunden. Die oben gezeichneten Eingänge sind jeweils mit Ausgängen eines 4-Bit-Kontrollspeichers KS1...KS63 verbunden. Insgesamt sind 63 solcher Speicher vorhanden, einer für jedes 2048-kbit/s-Signal. Jeweils mit Anlegen eines neuen Ausgangsbytes wird ein 4-bit-Ergebnis der vorhergehenden Rechenzyklen gelesen und an die oberen Eingänge der Schaltung angelegt. Das an der Schaltung unten anliegende Ergebnis wird wieder in den 4-bit-Kontrollspeicher eingeschrieben. Die Ermittlung der Kontrollbits erfolgt jeweils für eine Pulsrahmenperiode eines P12-Signals.

Die von der Wortjustiereinrichtung abgegebenen Datenwörter DW (Bytes) werden in den Pufferspeicher 4 eingeschrieben. Hierbei ist jeder der 63 Tributary Units TU-12 bzw. den zugehörigen 2048-kbit/s-Signalen ein eigener Speicherbereich mit beispielsweise 16 Bytes Umfang zugeordnet. Das Einschreiben und das Auslesen erfolgt byteweise mit Hilfe eines zentralen synchronen Taktes, wobei gegebenenfalls während einzelner Taktperioden kein Einschreiben bzw. Auslesen erfolgt, wenn dies durch die tatsächlichen Bitraten des 2048-kbit/s-Signals oder durch byteweise Stopfvorgänge bedingt ist. Das Auslesen aus dem Pufferspeicher 4 wird über Steuerleitungen 11 von den Parallel-Seriell-Umsetzern gesteuert. Der Phasenregeleinrichtung 7 werden von dem Pufferspeicher 4 die Schreibadressen WA und Leseadressen RA der einzelnen Speicherbereiche über weitere Busverbindungen 9 und 10 zugeführt.

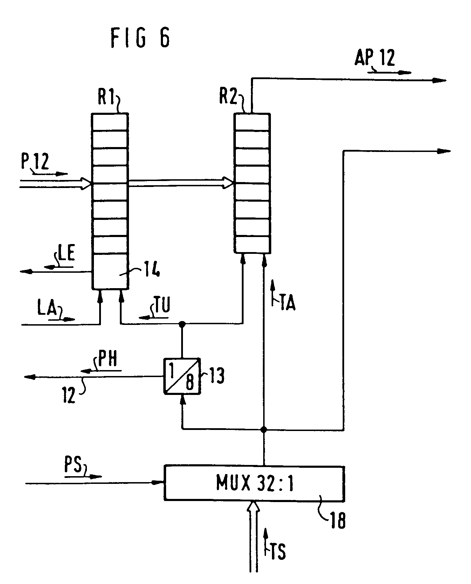

Ein Parallel-Seriell-Umsetzer PSU ist in Figur 6 dargestellt. Seine Funktion entspricht im wesentlichen der Funktion von bekannten Umsetzern. In ein erstes Übernahmeregister R1 werden die Datenwörter eines P12-Signals parallel übernommen und von diesem parallel in ein zweites Register R2, das Ausgabe-Schieberegister, eingespeichert, sobald dieses leer ist. Eine weitere dem ersten Register R1 zugeordnete Speicherstufe 14 gibt an, ob die Daten aus dem ersten Register bereits übernommen worden sind und somit neue eingespeichert werden können. Mit dem Einspeichern eines neuen Datenworts (Bytes) wird die Speicherstufe 14 mit dem Setzen-Signal LA gesetzt und gibt die Zustandsmeldung LE = "voll" ab.

Als Ausgabetaktsignal TA für das zweite Register R2 wird hier eine von 32 möglichen Taktphasen des Taktsignals TS verwendet. Ein Übernahmetaktsignal TU, das zum Einspeichern der Daten aus dem ersten Register dient, wird durch einen Frequenzteiler 13 erzeugt. Die Teilerstellung (d.h. die Phase PH des Übernahmetaktes) wird der Phasenregeleinrichtung 7 über Steuerleitungen 12 signalisiert, die an eine Phasenkorrektureinrichtung 18 ein Phasen-Steuersignal PS zur Auswahl der günstigsten (nächsten) Taktphase des Taktsignals TS liefert.

Das Taktsignal TS weist hier eine gegenüber dem internen Taktsignal leicht erhöhte Frequenz von 2048,219 kHz auf, so daß die Synchronisierung ausschließlich durch Wahl jeweils des nächsten phasenverschobenen Taktes durch die als 32:1-Multiplexer ausgebildete Phasenkorrektureinrichtung erfolgt, durch den eine Verlängerung eines Impulses und damit eine Verringerung der Frequenz bewirkt. Details dieser Schaltung sind in der europäischen Patentanmeldung 039 33 41 A1 beschrieben.

Soll keine Parallel-Seriell-Wandlung vorgenommen werden, kann auf das zweite Register R2 verzichtet werden. An die Ausgänge des Übernahmeregisters können Demultiplexer zur Umsetzung in die 64-kbit-Signale angeschaltet werden. Der Übernahmetakt TU ist dann als Ausgabetakt anzusehen.

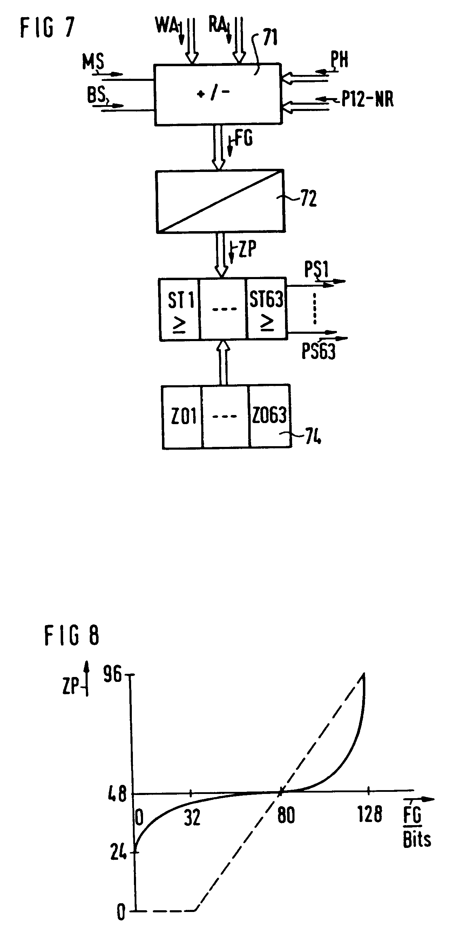

In Figur 7 ist ein erweitertes Prinzipschaltbild der Phasenregeleinrichtung 7 dargestellt. Diese enthält ein Rechenwerk 71, eine Speichereinrichtung 73 mit Speichern ST1 bis ST63 zum Abspeichern der Grenzwerte von Zählerständen der 63 Oszillatorzähler ZO1 bis ZO63 des Zählerblocks 74 und einen Tabellenspeicher 72. Das Rechenwerk 71 berechnet aus der Differenz von Schreibadresse WA und Leseadresse LA separat für jeden Bereich des Pufferspeichers, aus der Stellung der Multiplexer bzw. dem Multiplexer-Steuersignal MS der Wortjustiereinrichtung und der Phase PH des zugehörigen Parallel-Seriell-Umsetzers die Anzahl der in diesen Bereich der 2048 kbit/s-Signale gespeicherten Bits, also den Füllgrad FG. (Auf das Bytestopfsignal BS soll hier nicht eingegangen werden). Im Zeitmultiplexverfahren werden beispielsweise einmal während eines C4-Pulsrahmens je Tributary Unit TU12 bzw. je 2048 kbit/s-Signals folgende Funktionen ausgeführt:
a) Je nach Signalnummer P12-NR = P12.1 bis P12.63 wird der Füllgrad aus der Schreib-, der Leseadresse, dem Steuersignal für die Multiplexer MS und des Phasensignals PH berechnet.
b) Mit diesem wird der Tabellenspeicher 71 angesteuert, der die gewünschten Grenzwerte der Periodenzähler der zugehörigen Oszillatorzähler ZO einstellt.
c) Es wird überprüft ob der Grenzwert erreicht ist und eine Phasenkorrektur erfolgen soll.

Es ist ausreichend, wenn dieser Vorgang einmal während eines Rahmens des VC-4 Containers oder noch seltener durchgeführt wird.

Die Oszillatorzähler können als herkömmliche Binärzähler oder einfache Register verwendet werden, deren Inhalt über einen Addierer jeweils innerhalb eines VC-4-Containers um Eins erhöht wird. Durch den variablen Grenzwert wird die Periodendauer festgelegt. Bei Erreichen dieses Grenzwertes wird ein Phasen-Steuersignal PS an den Multiplexer MUX32 der Phasenkorrektureinrichtung 18 des zugehörigen Parallel-Seriell-Umsetzers abgegeben und hierdurch die Phase des Ausgabetaktes TA verzögert.

Die Häufigkeit der Phasenkorrekturschritte in jedem Parallel-Seriel-Umsetzer wird also von dem Grenzwert ZP (Zählerperiode) des zugehörigen Oszillatorzählers bestimmt. Je kleiner dieser Grenzwert, desto häufiger sind die Phasenkorrekturschnitte und desto niedriger ist der Mittelwert der Taktfrequenz des ausgegebenen 2048 kbit/s-Signals. Jeder Synchronisationsvorgang bewirkt eine Phasenverzögerung um 1/32 Periode des Taktsignals TS. Entsprechend wird ein Bit des Ausgangssignals um ca. 3 % verlängert. Der Synchronisationsvorgang wiederholt sich regelmäßig und bewirkt so eine Anpassung des Mittelwertes der Taktfrequenz des ausgegebenen Signals an dessen Originaldatenrate.

In Figur 8 ist ein Beispiel einer Kennlinie dargestellt, die die Abhängigkeit der Zählerperiode ZP vom Füllgrad des Speichers in Bits angibt. Anstelle der gestrichelt eingezeichneten linearen Kennlinie kann über eine eingespeicherte Tabelle auch eine nichtlineare Kennlinie erzeugt werden, die den Vorteil hat, daß ein vorteilhafter Zusammenhang zwischen der Anzahl der zwischengespeicherten Bits und den Mittelwert des Taktes des abgehenden Signals aufweist.

Beispielsweise kann bei nur wenig gespeicherten Bits der Mittelwert der Taktfrequenz des abgegebenen Signals besonders langsam werden bzw. bei vielen gespeicherten Bits schneller werden und bei dem Sollfüllgrad des Pufferspeicherbereiches von 80 Bits die Kennlinie flach verlaufen. Durch eine vorteilhafte Dimensionierung wird erreicht, daß die durch byteweises Stopfen in der TU-12 erzeugten Phasensprünge nur langsam und verteilt über eine längere Zeit an das Ausgangssignal weitergegeben werden. Die durch Stopfvorgänge bedingten Phasenveränderungen können auch, wie in der PCT-Anmeldung WO91/12678 beschrieben, stufenweise an die Phasenregeleinrichtung weitergegeben werden.

Selbstverständliche Schaltungsdetails wie die Taktversorgung und eine Steuereinrichtung für die Speicher wurden aus Gründen der Übersichtlichkeit nicht dargestellt. Deren Realisierung ist jedoch dem Fachmann ohnehin geläufig.

## Patentansprüche

1. Verfahren zur Rückgewinnung von in Funktionsdatenblöcken (VC4) übertragenen plesiochronen Signalen (P12), die oktettweise miteinander verschachtelt sind,
**dadurch gekennzeichnet,**
daß empfangsseitig jeweils ein Oktett aller plesiochronen Signale (P12=P12.1...P12.63) zwischengespeichert wird,
daß den einzelnen plesiochronen Signalen (P12.1....P12.63) zugehörige Stopfbits (S1) zwischengespeichert werden,
daß anschließend im Zeitmultiplexbetrieb für jedes der plesiochrone Signale (P12.1....P12.63) eine Wortjustierung unter Berücksichtigung von Stopfinformation (C1, C2) erfolgt,
indem aus einem zwischengespeicherten Oktett gegebenenfalls einschließlich der zugehörigen Stopfbits (S1) und eines aktuellen Oktetts ein Datenwort (DW) des jeweiligen plesiochronen Signals gebildet wird,
daß die plesiochronen Signale (P12) datenwortweise in jeweils einem plesiochronen Signal (P12.1....P12.63) zugeordneten separaten Speicherbereichen eines Pufferspeichers (4) zwischengespeichert werden,
daß dann die plesiochronen Signale (P12) im Zeitmultiplexbetrieb datenwortweise aus dem Pufferspeicher (4) ausgelesen und ausgegeben werden und
daß die Frequenz des jeweiligen Übernahmetaktes (TU) oder Ausgabetaktes (TA) individuell in Abhängigkeit vom Füllgrad des jeweiligen Speicherbereichs und damit von der Datenrate jedes plesiochronen Signals (P12.1....P12.63) geregelt wird.

2. Verfahren nach Anspruch 1,
**dadurch gekennzeichnet,**
daß die wortweise aus dem Pufferspeicher (4) ausgelesenen plesiochronen Signale (P12) zunächst in parallele Daten (AP12.1 ...AP12.63) umgesetzt und anschließend mit einem der Bitdatenrate entsprechenden Ausgabetakt (TA) seriell ausgegeben werden.

3. Verfahren nach Anspruch 1 oder 2,
**dadurch gekennzeichnet,**
daß die Frequenz jedes Ausgabetaktes (TA) in Abhängigkeit vom Füllgrad des zugeordneten Speicherbereiches des Pufferspeichers (4), der Phasenlage (PH) des Übernahmetaktes (TU) und der Steueradresse (MS) der Multiplexer (MUX1, ... MUX8), die den Versatz zwischen empfangenen Oktetts eines empfangenen Nutzdatensignals (DS) und den Bytes des plesiochronen Signals (P12.1...P12.63) angibt, geregelt wird.

4. Verfahren nach Anspruch 3,
**dadurch gekennzeichnet,**
daß als Ausgabetakt (TA, TU) ein Taktsignal (TS) mit erhöhter Frequenz verwendet wird und eine Synchronisierung nur durch Verlängern der Taktperiode erfolgt.

5. Verfahren nach Anspruch 3,
**dadurch gekennzeichnet,**
daß als Ausgabetakt ein mehrphasiges Taktsignal (TS) verwendet wird und eine Synchronisierung nur durch Auswahl des nächsten phasenverschobenen Signals erfolgt.

6. Verfahren nach einem der vorhergehenden Ansprüche,
**dadurch gekennzeichnet,**
daß im Zeitmultiplexbetrieb eine Paritätsüberprüfung der plesiochronen Signale (P12) erfolgt.

7. Anordnung zur Rückgewinnung von in Funktionsdatenblöcken (C4) übertragenen plesiochronen Signalen (P12), die oktettweise miteinander verschachtelt sind,
**dadurch gekennzeichnet,**
daß eine für Zeitmultiplexbetrieb geeignete Wortjustiereinrichtung (2) vorgesehen ist, der ein Datensignal (DS) der miteinander verschachtelten plesiochronen Signale (P12.1...P12.63) zugeführt wird,
daß die Wortjustiereinrichtung (2) einen Zwischenspeicher (21) für jeweils ein Oktett aller plesiochronen Signale (P12.1...P12.63) enthält, daß der Zwischenspeicher zusätzlich zur Speicherung von Stopfinformation (S1) vorgesehen ist,
daß eine Synchronisierung (17) zur Feststellung der Datenwortgrenzen der plesiochronen Signale (PS12.1...PS12.63) vorgesehen ist ,
daß eine Steuerung (23) vorgesehen ist, die unter Berücksichtigung von Stopfinformation (C1, C2) ein Datenwort aus einem zwischengespeicherten Oktett gegebenenfalls einschließlich Stopfbits und einem aktuellen Oktett bildet,
und daß ein Pufferspeicher (4) mit separaten Speicherbereichen für jedes der plesiochronen Signale (P12.1...P12.63) vorgesehen ist, dem die ausgerichteten plesiochronen Signale (P12.1...P12.63) datenwortweise vom Datenausgang der Wortjustiereinrichtung (2) im Zeitmultiplexbetrieb zugeführt werden,
daß an den Ausgang des Pufferspeichers (4) für die plesiochronen Signale (P12.1...P12.63) Übernahmeregister (R1, ...) angeschaltet sind, in die im Zeitmultiplexbetrieb Datenwörter eingeschrieben werden, und
daß eine Phasenregeleinrichtung (7) vorgesehen ist, die separat für jedes plesiochronen Signal (P12.1...P12.63) die mittlere Frequenz des Übernahmetaktsignals (TU) regelt.

8. Anordnung nach Anspruch 5,
**dadurch gekennzeichnet,**
daß gesteuerte Multiplexer (MUX1 ...MUX8) vorgesehen sind, an deren Eingängen jeweils aufeinanderfolgende zwischengespeicherte und aktuelle Bits desselben plesiochronen Signals (P12.1 ...P12.63) anliegen und an deren Ausgängen (A1...A8) jeweils ein Datenwort (DW) eines plesiochronen Signals (P12.1...P12.63) im Zeitmultiplexbetrieb abgegeben wird.

9. Anordnung nach Anspruch 5,
**dadurch gekennzeichnet,**
daß an den Ausgang des Pufferspeichers (4) Parallel-Seriell-Umsetzer (PSU1...PSU63) angeschaltet sind, deren Ausgabetaktsignale (TA) geregelt werden,
daß in jedem Parallel-Seriell-Umsetzer (PSU1....PSU63) eines der Übernahmeregister (R1, ...) vorgesehen ist, in das die Datenwörter parallel eingespeichert werden,
daß jeweils ein Ausgabe-Schieberegister (R2) vorgesehen ist, in das die Datenwörter parallel vom Übernahmeregister (R1) eingespeichert und seriell ausgegeben werden,
daß eine Speicherstufe (14) vorgesehen ist, die den Zustand des Übernahmeregisters (R1) angibt, und
daß jeweils ein Frequenzteiler (13) vorgesehen ist, der durch Frequenzteilung des Ausgabetaktsignals (TA) ein Übernahmetaktsignal (TU) erzeugt und ein Phasen-Steuersignal (PH) an die Phasenregeleinrichtung (7) abgibt.

10. Anordnung nach Anspruch 8,
**dadurch gekennzeichnet,**
daß als Phasenkorrektureinrichtung (12) ein Multiplexer (MUX32) vorgesehen ist, der jeweils als Ausgabetaktsignal (TA) ein Signal eines mehrphasigen Taktsignals (TS) durchschaltet.

11. Anordnung nach einem der vorhergehenden Ansprüche,
**dadurch gekennzeichnet,**
daß die Phasenregeleinrichtung (7) entsprechend der Anzahl der plesiochronen Signale mehrere digitale Phasenregelkreise aufweist.

12. Anordnung nach Anspruch 10,
**dadurch gekennzeichnet,**
daß entsprechend der Anzahl der plesiochronen Signale (P12.1...P12.63) mehrere Oszillatorzähler (ZO1.....ZO63) vorgesehen sind, deren Zählperiode veränderlich ist und die Häufigkeit der Phasenkorrekturschritte der Ausgabetaktsignale (TA) bestimmt.

## Claims

1. Method for recovering plesiochronous signals (P12) which are transmitted in functional data blocks (VC4) and are interleaved with one another octet by octet,
characterized
in that a respective octet of all the plesiochronous signals (P12=P12.1...P12.63) is buffer-stored in the receiving end,
in that justification bits (S1) associated with the individual plesiochronous signals (P12.1...P12.63) are buffer-stored,
in that word alignment is subsequently effected, with justification information (C1,C2) being taken into account, in the time division multiplex mode for each of the plesiochronous signals (P12.1...P12.63) by a data word (DW) of the respective plesiochronous signal being formed from a buffer-stored octet if appropriate including the associated justification bits (S1) and a current octet,
in that the plesiochronous signals (P12) are buffer-stored data word by data word in separate storage areas of a buffer store (4) which are respectively assigned to a plesiochronous signal (P12.1...P12.63),
in that the plesiochronous signals (P12) are then read from the buffer store (4) data word by data word in the time division multiplex mode and output, and
in that the frequency of the respective acceptance clock signal (TU) or output clock signal (TA) is individually regulated as a function of the occupancy of the respective storage area and thus of the data rate of each plesiochronous signal (P12.1...P12.63).

2. Method according to Claim 1,
characterized
in that the plesiochronous signals (P12) which are read word by word from the buffer store (4) are firstly converted into parallel data (AP12.1...AP12.63) and are subsequently output serially with an output clock signal (TA) corresponding to the bit data rate.

3. Method according to Claim 1 or 2,
characterized
in that the frequency of each output clock signal (TA) is regulated as a function of the occupancy of the assigned storage area of the buffer store (4), of the phase angle (PH) of the acceptance clock signal (TU) and of the control address (MS) of the multiplexers (MUX1,...MUX8), which specifies the offset between received octets of a received useful data signal (DS) and the bytes of the plesiochronous signal (P12.1...P12.63).

4. Method according to Claim 3,
characterized
in that a clock signal (TS) having an increased frequency is used as the output clock signal (TA,TU) and synchronization is effected only by lengthening the clock period.

5. Method according to Claim 3,
characterized
in that a multiphase clock signal (TS) is used as the output clock signal and synchronization is effected only by selecting the nearest phase-shifted signal.

6. Method according to one of the preceding claims,
characterized
in that a parity check of the plesiochronous signals (P12) is effected in the time division multiplex mode.

7. Arrangement for recovering plesiochronous signals (P12) which are transmitted in functional data blocks (C4) and are interleaved with one another octet by octet,
characterized
in that a word alignment device (2) suitable for time division multiplex operation is provided, a data signal (DS) of the plesiochronous signals (P12.1...P12.63) which are interleaved with one another being fed to the said word alignment device,
in that the word alignment device (2) contains a buffer store (21) for a respective octet of all the plesiochronous signals (P12.1...P12.63), in that the buffer store is additionally provided for the purpose of storing justification information (S1), in that a synchronization unit (17) is provided for the purpose of establishing the data word limits of the plesiochronous signals (PS12.1...PS12.63),
in that a controller (23) is provided, which, taking justification information (C1,C2) into account, forms a data word from a buffer-stored octet if appropriate including justification bits and a current octet,
and in that a buffer store (4) with separate storage areas for each of the plesiochronous signals (P12.1...P12.63) is provided, to which the aligned plesiochronous signals (P12.1...P12.63) are fed data word by data word from the data output of the word alignment device (2) in the time division multiplex mode,
in that acceptance registers (R1,...) are connected to the output of the buffer store (4) for the plesiochronous signals (P12.1...P12.63), data words being written to the said acceptance registers in the time division multiplex mode, and
in that a phase regulating device (7) is provided, which regulates the average frequency of the acceptance clock signal (TU) separately for each plesiochronous signal (P12.1...P12.63).

8. Arrangement according to Claim 5,
characterized
in that controlled multiplexers (MUX1...MUX8) are provided, respectively successive buffer-stored and current bits of the same plesiochronous signal (P12.1...P12.63) being present at the inputs of the said multiplexers and a respective data word (DW) of a plesiochronous signal (P12.1...P12.63) being output at the outputs (A1...A8) of the said multiplexers in the time division multiplex mode.

9. Arrangement according to Claim 5,
characterized
in that parallel-serial converters (PSU1...PSU63) are connected to the output of the buffer store (4), the output clock signals (TA) of the said converters being regulated,
in that one of the acceptance registers (R1,...) is provided in each parallel-serial converter (PSU1...PSU63), into which register the data words are stored in parallel,
in that an output shift register (R2) is provided in each case, into which register the data words are stored in parallel from the acceptance register (R1) and are output serially,
in that a storage stage (14) is provided, which specifies the state of the acceptance register (R1), and
in that a frequency divider (13) is provided in each case, which frequency divider generates an acceptance clock signal (TU) by frequency division of the output clock signal (TA) and outputs a phase control signal (PH) to the phase regulating device (7).

10. Arrangement according to Claim 8,
characterized
in that a multiplexer (MUX32) is provided as phase correction device (12), which multiplexer respectively switches through a signal of a multiphase clock signal (TS) as the output clock signal (TA).

11. Arrangement according to one of the preceding claims,
characterized
in that the phase regulating device (7) has a plurality of digital phase locked loops in accordance with the number of plesiochronous signals.

12. Arrangement according to Claim 10,
characterized
in that a plurality of oscillator counters (ZO1.....ZO63) are provided in accordance with the number of plesiochronous signals (P12.1...P12.63), the counting period of which counters is variable and determines the frequency of the phase correction steps of the output clock signals (TA).

## Revendications

1. Procédé pour la récupération de signaux plésiochrones (P12) transmis dans des blocs de données fonctionnels (VC4) et imbriqués les uns dans les autres par octets,
caractérisé par le fait que
côté réception, on mémorise temporairement à chaque fois un octet de tous les signaux plésiochrones (P12 = P12.1 à P12.63),
on mémorise temporairement des bits de remplissage (S1) associés aux signaux plésiochrones (P12.1 à P12.63) individuels,
ensuite, en multiplexage temporel, pour chacun des signaux plésiochrones (P12.1 à P12.63), on effectue un ajustage de mot en tenant compte d'une information de remplissage (C1, C2), et ce en formant à partir d'un octet mémorisé temporairement, y compris éventuellement les bits de remplissage associés (S1) et un octet actuel, un mot de données (DW) du signal plésiochrone respectif,
on mémorise temporairement les signaux plésiochrones (P12) mot de données par mot de données dans des zones de mémoire séparées, associées à chaque fois à un signal plésiochrone (P12.1 à P12.63), d'une mémoire tampon (4),
on lit ensuite dans la mémoire tampon (4) les signaux plésiochrones (P12) mot de données par mot de données en multiplexage temporel et on les délivre en sortie, et
on règle la fréquence de l'horloge de transfert (TU) respective ou de l'horloge de sortie (TA) respective individuellement en fonction du taux de remplissage de la zone de mémoire respective et donc en fonction du débit de données de chaque signal plésiochrone (P12.1 à P12.63).

2. Procédé selon la revendication 1,
caractérisé par le fait que
on convertit d'abord les signaux plésiochrones (P12) lus mot par mot dans la mémoire tampon (4) en données parallèles (AP12.1 à AP12.63) et on les délivre ensuite en sortie en série avec une horloge de sortie (TA) correspondant au débit de données binaire.

3. Procédé selon la revendication 1 ou 2,
caractérisé par le fait que
on règle la fréquence de chaque horloge de sortie (TA) en fonction du taux de remplissage de la zone de mémoire associée de la mémoire tampon (4), de la relation de phase (PH) de l'horloge de transfert (TU) et de l'adresse de commande (MS) des multiplexeurs (MUX1 à MUX8) qui indique le décalage entre les octets reçus d'un signal de données utiles (DS) reçu et les octets du signal plésiochrone (P12.1 à P12.63).

4. Procédé selon la revendication 3,
caractérisé par le fait que
on utilise comme horloge de sortie (TA, TU) un signal d'horloge (TS) avec une fréquence accrue et on effectue une synchronisation simplement en prolongeant la période d'horloge.

5. Procédé selon la revendication 3,
caractérisé par le fait que
on utilise comme horloge de sortie un signal d'horloge (TS) à plusieurs phases et on effectue une synchronisation simplement en sélectionnant le prochain signal déphasé.

6. Procédé selon l'une des revendications précédentes,
caractérisé par le fait que,
en multiplexage temporel, on effectue un contrôle de parité des signaux plésiochrones (P12).

7. Dispositif pour la récupération de signaux plésiochrones (P12) transmis dans des blocs de données fonctionnels (C4) et imbriqués les uns dans les autres par octets,
caractérisé par le fait que
il est prévu un dispositif d'ajustage de mot (2) qui convient au multiplexage temporel et auquel est envoyé un signal de données (DS) des signaux plésiochrones (P12.1 à P12.63) imbriqués les uns dans les autres,
le dispositif d'ajustage de mot (2) contient une mémoire intermédiaire (21) pour à chaque fois un octet de tous les signaux plésiochrones (P12.1 à P12.63), la mémoire intermédiaire étant prévue en plus pour la mémorisation d'une information de remplissage (S1),
il est prévu une unité de synchronisation (17) pour la détermination des limites de mots de données des signaux plésiochrones (PS12.1 à PS12.63),
il est prévu une commande (23) qui forme en tenant compte de l'information de remplissage (C1, C2) un mot de données à partir d'un octet mémorisé temporairement, éventuellement y compris à partir de bits de remplissage et d'un octet actuel,
et il est prévu une mémoire tampon (4) avec des zones de mémoire séparées pour chacun des signaux plésiochrones (P12.1 à P12.63), les signaux plésiochrones alignés (P12.1 à P12.63) étant envoyés mot de données par mot de données par la sortie de données du dispositif d'ajustage de mot (2) en multiplexage temporel à cette mémoire tampon,
il est branché à la sortie de la mémoire tampon (4) pour les signaux plésiochrones (P12.1 à P12.63) des registres de transfert (R1, etc.) dans lesquels des mots de données sont écrits en multiplexage temporel, et
il est prévu un dispositif de régulation de phase (7) qui règle séparément pour chaque signal plésiochrone (P12.1 à P12.63) la fréquence moyenne du signal d'horloge de transfert (TU).

8. Dispositif selon la revendication 5,
caractérisé par le fait que
il est prévu des multiplexeurs commandés (MUX1 à MUX8) aux entrées desquels se trouvent à chaque fois des bits mémorisés et actuels successifs du même signal plésiochrone (P12.1 à P12.63) et aux sorties (A1 à A8) desquels est délivré à chaque fois un mot de données (DW) d'un signal plésiochrone (P12.1 à P12.63) en multiplexage temporel.

9. Dispositif selon la revendication 5,
caractérisé par le fait que
il est branché à la sortie de la mémoire tampon (4) des convertisseurs parallèle-série (PSU1 à PSU63) dont les signaux d'horloge de sortie (TA) sont réglés,
il est prévu dans chaque convertisseur parallèlesérie (PSU1 à PSU63) un des registres de transfert (R1, etc.) dans lequel les mots de données sont mémorisés en parallèle,
il est prévu à chaque fois un registre de décalage de sortie (R2) dans lequel les mots de données sont mémorisés en parallèle par le registre de transfert (R1) et sont délivrés en sortie en série,
il est prévu un étage de mémoire (14) qui indique l'état du registre de transfert (R1), et
il est prévu à chaque fois un diviseur de fréquence (13) qui produit par une division de fréquence du signal d'horloge de sortie (TA) un signal d'horloge de transfert (TU) et qui délivre un signal de commande de phase (PH) au dispositif de régulation de phase (7).

10. Dispositif selon la revendication 8,
caractérisé par le fait que
il est prévu comme dispositif de correction de phase (12) un multiplexeur (MUX32) qui connecte à chaque fois comme signal d'horloge de sortie (TA) un signal d'un signal d'horloge à plusieurs phases (TS).

11. Dispositif selon l'une des revendications précédentes,
caractérisé par le fait que
le dispositif de régulation de phase (7) comporte plusieurs boucles à verrouillage de phase numériques en fonction du nombre des signaux plésiochrones.

12. Dispositif selon la revendication 10,
caractérisé par le fait que
il est prévu, en fonction du nombre des signaux plésiochrones (P12.1 à P12.63), plusieurs compteurs oscillateurs (ZO1 à ZO63) dont la période de comptage est variable et détermine la fréquence des étapes de correction de phase des signaux d'horloge de sortie (TA).
